(19) Europäisches Patentamt
European Patent Office
Office européen des brevets

(11) **EP 3 767 260 B1**

(12) **FASCICULE DE BREVET EUROPEEN**

(45) Date de publication et mention
de la délivrance du brevet:
**16.02.2022 Bulletin 2022/07**

(21) Numéro de dépôt: **20185036.9**

(22) Date de dépôt: **09.07.2020**

(51) Classification Internationale des Brevets (IPC):
**G01J 5/34** *(2022.01)*    **G06K 9/00** *(2022.01)*

(52) Classification Coopérative des Brevets (CPC):
**G01J 5/34; G06V 40/1306**

(54) **CAPTEUR ET PROCEDE DE CAPTURE DE MOTIF THERMIQUE A DOUBLE INTEGRATION**

SENSOR UND VERFAHREN ZUR ERFASSUNG EINES WÄRMEMUSTERS MIT DOPPELTER INTEGRATION

SENSOR AND METHOD FOR THERMAL PATTERN CAPTURE WITH DOUBLE INTEGRATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2019 FR 1908145**

(43) Date de publication de la demande:
**20.01.2021 Bulletin 2021/03**

(73) Titulaires:
• **Commissariat à l'Energie Atomique et aux Energies
Alternatives
75015 Paris (FR)**
• **Idemia Identity & Security France
92400 Courbevoie (FR)**

(72) Inventeurs:
• **MAINGUET, Jean-François
38054 GRENOBLE CEDEX 09 (FR)**
• **FOURRE, Joël Yann
92400 COURBEVOIE (FR)**

(74) Mandataire: **Brevalex
95, rue d'Amsterdam
75378 Paris Cedex 8 (FR)**

(56) Documents cités:
EP-A1- 3 276 534    EP-A1- 3 502 639
FR-A1- 3 044 443    FR-A1- 3 069 938
US-A- 6 091 837

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE ET ART ANTÉRIEUR**

L'invention concerne un capteur de motif thermique, ainsi qu'un procédé de capture de motif thermique. L'invention est avantageusement utilisée pour réaliser une capture d'empreinte digitale par détection thermique.

Il est connu de réaliser un capteur d'empreinte digitale comportant des moyens de détection thermique. Ces moyens de détection thermique peuvent correspondre à des capacités pyroélectriques, des diodes, des thermistances, ou plus généralement tout élément thermosensible convertissant une variation de température subie par l'élément thermosensible en une variation d'un paramètre électrique de l'élément thermosensible tel qu'un potentiel électrique aux bornes de l'élément thermosensible, un courant électrique généré par l'élément thermosensible ou encore une variation de la résistance électrique de l'élément thermosensible.

La détection d'empreinte digitale peut être réalisée par des capteurs dits « passifs » qui exploitent une différence de température entre le doigt et le capteur, comme décrit dans les documents US 4 394 773, US 4 429 413 et US 6 289 114. Ces capteurs ont toutefois pour inconvénient de réaliser une mesure qui dépend uniquement de cette différence de température. Il peut donc arriver que le niveau du signal obtenu en sortie soit nul lorsque le doigt et le capteur sont à la même température, ou que le contraste des images capturées varie, ce qui pose alors des problèmes lors du traitement numérique ultérieur des images capturées.

Pour éliminer ces problèmes posés par les capteurs thermiques passifs, et également pour pouvoir réaliser une acquisition statique où le doigt ne bouge pas, des capteurs dits « actifs » ont été proposés, comme par exemple celui décrit dans les documents US 6 091 837 et EP 2 385 486 A1.

Dans un tel capteur actif, chaque pixel comporte une capacité pyroélectrique formée de deux électrodes conductrices entre lesquelles une portion de matériau pyroélectrique est disposée, et un élément chauffant. Cet élément chauffant dissipe une certaine quantité de chaleur dans le pixel (notamment dans la portion de matériau pyroélectrique), et l'échauffement du pixel est mesuré au bout d'un certain temps d'acquisition en présence du doigt sur le capteur.

Au niveau de chaque pixel, il est possible de distinguer la présence d'une crête ou d'une vallée de l'empreinte capturée suivant que la chaleur apportée par l'élément chauffant est absorbée par la peau (pixel en présence d'une crête de l'empreinte) ou conservée dans le pixel (pixel en présence d'une vallée de l'empreinte). A l'issue du temps d'acquisition, la température d'un pixel en présence d'une crête, où la chaleur est absorbée par la peau, est plus faible que celle d'un pixel en présence d'une vallée, où la chaleur n'est pas absorbée par la peau et reste dans le pixel.

Au premier ordre, un tel capteur permet de mesurer la capacité calorifique, également appelée chaleur massique ou capacité thermique massique, d'un élément (le doigt lors d'une capture d'empreinte digitale) en contact avec les pixels du capteur. Les mesures obtenues dépendent également de la conductivité thermique entre les pixels du capteur et la partie de l'élément (crête ou vallée dans le cas d'une empreinte digitale) en présence sur chaque pixel.

Lors d'une capture d'un motif thermique par un capteur à détection thermique actif, tous les pixels du capteur sont lus de la même manière, et de manière régulière à la même cadence, c'est-à-dire avec une durée de mesure fixe identique pour tous les pixels. Cette durée de mesure, qui correspond à une durée pendant laquelle un pixel réalise la mesure thermique de l'élément se trouvant en contact avec lui, est généralement ajustée de manière à obtenir un bon contraste entre les crêtes et les vallées de l'empreinte digitale, c'est-à-dire est suffisamment longue pour obtenir un niveau de signal important par rapport au bruit. Cette durée de mesure doit toutefois ne pas être trop longue pour que la durée totale de la capture reste acceptable par l'utilisateur et que la mesure ne soit pas perturbée par des mouvements du doigt sur la surface du capteur.

La lecture des pixels réalisée dans un capteur à détection thermique actif peut correspondre par exemple à une mesure des charges générées dans chaque pixel, qui est mise en œuvre avec un intégrateur de charges, mais d'autres méthodes sont possibles en fonction des moyens de détection thermique utilisés.

Un capteur thermique actif est sensible aux variations de température provoquées par le chauffage, mais reste également sensible à celles induites par la différence de température entre le doigt présent sur le capteur et le capteur. Les deux signaux générés par ces deux types de variations se superposent. Le capteur est généralement configuré pour avoir un signal dit « actif », correspondant aux variations de température provoquées par le chauffage, bien supérieur au signal dit « passif » qui correspond à la différence de température entre le doigt et le capteur. En d'autres termes, la variation de température induite par le chauffage est bien supérieure à la variation de température due à la différence de température initiale entre le doigt et le capteur (et qui pourrait être quasiment nulle si le capteur est par exemple à la même température que le doigt).

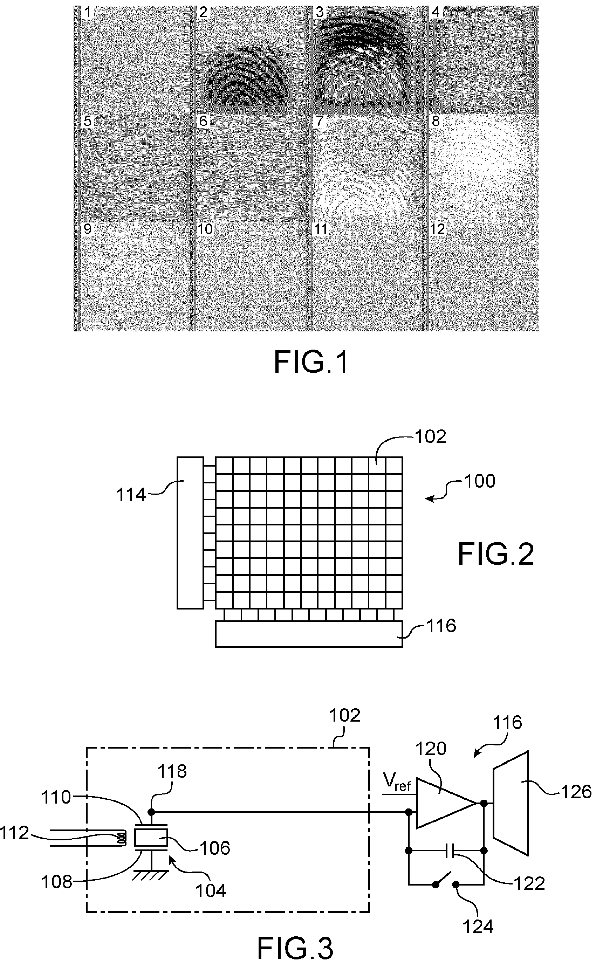

La figure 1 représente plusieurs images successives obtenues lors de la lecture d'une empreinte digitale d'un doigt posé puis retiré d'un capteur thermique actif. Les images visibles sur la figure 1 sont numérotées de 1 à 12 et correspondent à des captures successives chacune espacée d'une durée de 40 ms par rapport à la capture de l'image précédente. Sur ces images, la couleur grise est utilisée comme couleur neutre reflétant l'absence de charges générées, et le noir et le blanc reflètent la génération de charges positives ou négatives respectivement selon que l'élément se trouvant sur le capteur soit plus ou moins chaud que le capteur.

Au moment où le doigt est posé sur le capteur, que le capteur soit de type thermique actif ou passif, si la différence de température entre le doigt et le capteur est non nulle, alors des charges positives ou négatives (suivant que le doigt est plus ou moins chaud que le capteur et suivant le sens de polarisation du matériau pyroélectrique) sont générées dans les régions où le doigt entre en contact avec le capteur. Ainsi, sur les images 2 et 3 de la figure 1, les crêtes de l'empreinte qui apparaissent en noir correspondent à une partie du doigt qui vient d'entrer en contact avec le capteur. Ce contraste important reflète la différence de température importante qui existe à ce moment entre le doigt et le capteur.

Les charges générées par la présence du doigt sur le capteur apparaissent sur les images capturées plus ou moins rapidement et avec plus ou moins de contraste en fonction de la vitesse de lecture du capteur et de la vitesse avec laquelle le doigt se pose sur le capteur. Après la lecture de ces charges par l'imageur, elles disparaissent et ne sont donc plus visibles sur les images suivantes. Le contraste du motif lié à ces charges diminue alors sur les images suivantes.

Un autre phénomène se produit juste après le contact du doigt sur le capteur. Sur l'image 3 de la figure 1, une partie des crêtes de l'empreinte qui étaient déjà visibles sur l'image 2 sont devenues blanches et non grises. En effet, au moment du contact du doigt sur le capteur, les pixels ont fortement chauffés. Cela se voit bien sur l'image 2, avec les crêtes qui apparaissent en noir car la température de la peau est supérieure à celle du capteur lors de la capture de cette image. L'ensemble doigt-capteur refroidit ensuite, et ce refroidissement se traduit par une génération de charges négatives pour les pixels en contact avec les crêtes qui apparaissent alors en blanc.

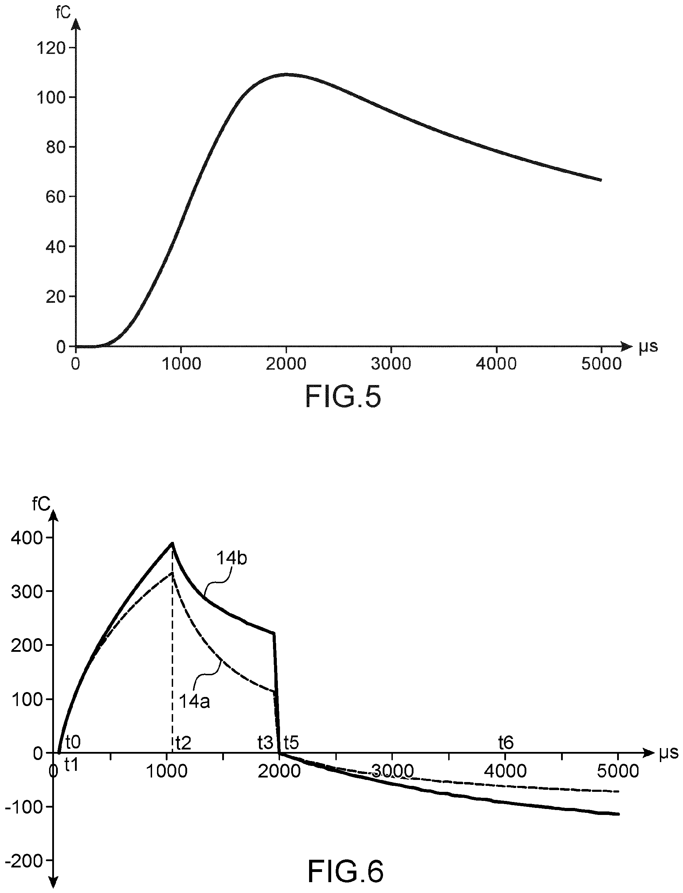

Une température d'équilibre est ensuite atteinte, comme cela est visible sur les figures 5 et 6.

Le phénomène inverse se produit au moment où le doigt est retiré car le capteur a tendance à revenir à sa température initiale, si son substrat possède une masse thermique supérieure à celle du doigt et qu'il n'a alors pas eu le temps de chauffer. Cela est visible sur les images 7 et 8 de la figure 1 sur lesquelles les crêtes de l'empreinte deviennent blanches.

En outre, l'utilisateur n'est pas totalement stable lorsqu'il pose son doigt sur le capteur, et ce phénomène d'alternance contact/non contact passif reste visible à la périphérie de l'empreinte (voir l'image 4 sur laquelle les parties des crêtes de l'empreinte présentes en périphérie restent noires et non grises comme les autres parties des crêtes de l'empreinte).

Le même phénomène se produit lorsque le doigt glisse sur le capteur : du fait de la présence des crêtes et des vallées, la peau est contact puis n'est plus en contact vu d'un pixel particulier, et des variations sont induites dans le capteur.

Il existe également d'autres phénomènes parasites générant des charges dans le capteur, par exemple par effet piézoélectrique avec les variations de la pression appliquée par le doigt sur le capteur, ou bien les charges apportées par couplage capacitif à travers le doigt (par exemple des signaux de fréquence égale à 50 Hz générés par l'environnement électromagnétique). Ces charges générées par ces phénomènes parasites vont s'additionner aux charges générées par l'effet thermique « actif » et donc perturber l'acquisition d'images.

Pour limiter l'impact des phénomènes parasites sur la capture, il est possible d'augmenter la puissance de chauffage réalisée dans le capteur, de manière à rendre ces signaux négligeables vis-à-vis du signal utile. Toutefois, une telle solution n'est pas adaptée à certaines applications, comme par exemple lorsque les capteurs font partie de cartes à puce ou d'objets connectés qui ne disposent que de peu de puissance pour alimenter les éléments chauffants du capteur, ce qui ne permet pas d'augmenter suffisamment la puissance du chauffage au point de limiter significativement l'impact des phénomènes parasites.

Une autre solution consiste à réduire les durées de mesure, c'est-à-dire les temps d'intégration des charges. Les variations lentes devant le chauffage actif verront leurs effets réduits car c'est la variation de température entre le début et la fin de la mesure qui compte. Cette solution n'est toutefois pas non plus satisfaisante car cela se traduit par une baisse du contraste obtenu.

Il est également possible d'augmenter la durée du chauffage réalisé. Là encore, cette solution n'est pas satisfaisante car les signaux issus des phénomènes parasites vont augmenter en même temps que la durée du chauffage.

Une autre solution consiste à ne pas conserver les premières et dernières images d'une capture lorsque trop d'effets parasites sont constatés. Cette solution n'est pas non plus satisfaisante car de l'énergie a été gaspillée inutilement pour capturer ces premières et dernières images.

## EXPOSÉ DE L'INVENTION

Un but de la présente invention est de proposer un capteur et un procédé de capture d'un motif thermique limitant ou supprimant l'impact des phénomènes parasites sur les captures réalisées.

Pour cela, la présente invention propose un procédé de capture d'un motif thermique par un capteur comportant plusieurs pixels comprenant chacun au moins un élément de mesure thermosensible, le capteur comprenant en outre :

- au moins un élément chauffant configuré pour chauffer l'élément de mesure thermosensible d'au moins un pixel lors d'une mesure par l'élément de mesure thermosensible dudit au moins un pixel ;
- au moins un circuit de lecture configuré pour lire des charges électriques délivrées par ledit au moins un pixel lors de la mesure par l'élément de mesure thermosensible dudit au moins un pixel ;

le procédé comportant, pour chaque pixel, au moins la mise en œuvre des étapes suivantes :

- chauffage de l'élément de mesure thermosensible du pixel pendant une durée de chauffage débutant à un instant $t_0$ et s'achevant à un instant $t_2$ postérieur à l'instant $t_0$ ;
- première lecture des charges électriques délivrées par le pixel pendant une première durée de mesure débutant à un instant $t_1$ et s'achevant à un instant $t_3$ postérieur à l'instant $t_1$, et donnant une première valeur de mesure $x_1$ correspondant aux charges électriques lues pendant la première durée de mesure $t_3 - t_1$ ;
- deuxième lecture des charges électriques délivrées par le pixel pendant une deuxième durée de mesure débutant à un instant $t_4$ postérieur à l'instant $t_3$, et s'achevant à un instant $t_5$ postérieur à l'instant $t_4$, et donnant une deuxième valeur de mesure $x_2$ correspondant aux charges électriques lues pendant la seconde durée de mesure $t_5 - t_4$ ;
- calcul d'une différence $x_1 - \alpha.x_2$, avec $\alpha$ correspondant à un nombre réel positif,

et dans lequel plus de la moitié de la durée de chauffage est mise en œuvre pendant la première durée de mesure et moins de la moitié de la durée de chauffage est mise en œuvre pendant dans la deuxième durée de mesure.

Dans ce procédé, la première lecture des charges électriques est mise en œuvre pendant plus de la moitié de la phase de chauffage de l'élément de mesure thermosensible du pixel lu. Par contre, la deuxième lecture des charges électriques est mise en œuvre pendant moins de la moitié de la phase de chauffage, et donc au moins en partie pendant le refroidissement du pixel lu. Pendant le refroidissement, un pixel en contact avec la peau refroidit plus vite qu'un pixel sans contact avec la peau, à l'inverse du chauffage, et ce à partir d'un certain temps qui dépend de l'inertie thermique du pixel. La différence calculée ensuite permet de cumuler les charges positives et négatives obtenues lors des première et deuxième lectures, et ainsi augmenter le signal de mesure obtenu à l'issue du procédé. Un meilleur contraste est donc obtenu entre les pixels qui sont en contact avec les parties de différente conductivité thermique de l'élément dont le motif thermique est capturé, par exemple entre les pixels en contact avec les crêtes du doigt dont l'empreinte digitale est capturée et les pixels se trouvant en regard des vallées du doigt dont l'empreinte digitale est capturée.

De plus, la différence calculée à partir des deux valeurs de mesure obtenues permet de réduire voire supprimer les signaux dus aux phénomènes parasites dont la contribution est identique au cours de deux lectures de charges de durées identiques.

L'instant $t_2$ intervient avant l'instant $t_5$ tel que la deuxième lecture des charges électriques délivrées par le pixel est mise en œuvre au moins en partie pendant un refroidissement du pixel lu.

L'instant $t_2$ peut être compris entre les instants $t_1$ et $t_3$. Dans ce cas, le chauffage est stoppé pendant la première lecture, et la deuxième lecture est entièrement mise en œuvre pendant une phase de refroidissement du pixel.

De manière avantageuse, le procédé et le capteur peuvent être configurés pour réaliser une capture d'une empreinte digitale en contact avec une surface de capture du capteur.

$\alpha$ peut être égal à la valeur du rapport de la première durée de mesure sur la deuxième durée de mesure. Le coefficient $\alpha$ permet dans ce cas de compenser une différence entre les première et deuxième durées de mesure.

En variante, la valeur de $\alpha$ peut être différente de celle du rapport entre la première durée de mesure et la deuxième durée de mesure.

De manière avantageuse, la première durée de mesure peut être égale à la deuxième durée de mesure. Ce cas est avantageux car la contribution des phénomènes parasites est alors identique dans chacune des première et deuxième lectures des charges électriques. Ces phénomènes parasites sont donc complètement annulés grâce au calcul de la différence $x_1 - x_2$ (a = 1 dans ce cas lorsque $\alpha$ est égal à la valeur du rapport de la première durée de mesure sur la deuxième durée de mesure).

Le procédé peut comporter en outre, après le calcul de la différence $x_1 - \alpha.x_2$ pour chacun des pixels, une étape de calcul d'une image du motif thermique capturé à partir des valeurs des différences $x_1 - \alpha.x_2$ calculées pour chaque pixel du capteur.

Le procédé peut comporter en outre, entre les première et deuxième lectures, une réinitialisation du circuit de lecture, ou une réinitialisation du pixel.

Le procédé peut être tel que :

- la valeur de la durée du chauffage $t_2 - t_0$ est comprise entre environ 60 μs et 5000 μs, ou entre 200 μs et 5000 μs (par exemple pour un capteur réalisant une lecture des pixels ligne par ligne), ou entre 60 μs et 200 μs (par exemple pour un capteur réalisant une lecture pixel par pixel), et/ou
- chacune des première et deuxième durées de mesure a une valeur comprise entre environ 60 μs et 5000 μs, ou

entre 250 $\mu$s et 5000 $\mu$s (par exemple pour un capteur réalisant une lecture des pixels ligne par ligne), ou entre 60 $\mu$s et 300 $\mu$s (par exemple pour un capteur réalisant une lecture pixel par pixel), et/ou

- les instants $t_0$ et $t_1$ sont choisis tels que la durée entre le début du chauffage et le début de la première lecture soit comprise entre environ 0 et 200 $\mu$s (par exemple pour un capteur réalisant une lecture des pixels ligne par ligne), ou entre 0 et 100 $\mu$s (par exemple pour un capteur réalisant une lecture pixel par pixel).

De manière avantageuse, $t_1$ est postérieur à $t_0$, c'est-à-dire que le chauffage débute avant le début de la première lecture. Toutefois, il est possible que $t_0$ soit postérieur à $t_1$ ou soit égal à $t_1$, c'est-à-dire que le chauffage débute après le début de la première lecture ou simultanément au début de la première lecture.

Les valeurs données ci-dessus sont fournies à titre indicatif. Les valeurs des différentes durées indiquées ci-dessus dépendent des caractéristiques du capteur, et notamment de la sensibilité du circuit de lecture, de la taille de chaque pixel, ainsi que des diverses épaisseurs des couches et des matériaux présents dans le capteur.

Le procédé peut être tel que :

- les première et deuxième valeurs de mesure $x_1$ et $x_2$ sont mémorisées dans le circuit de lecture, et la différence $x_1 - \alpha.x_2$ est calculée dans le circuit de lecture puis le résultat de cette différence est délivré en sortie du circuit de lecture, ou
- les première et deuxième valeurs de mesure $x_1$ et $x_2$ sont délivrées successivement en sortie du circuit de lecture, et la différence $x_1 - \alpha.x_2$ est calculée en dehors du circuit de lecture.

Le calcul de la différence $x_1 - \alpha.x_2$ peut être réalisé à l'extérieur du circuit de lecture, c'est-à-dire après avoir réalisé une conversion analogique - numérique de chacune des valeurs de mesure $x_1$ et $x_2$.

En variante, il est possible, après avoir réalisé la première mesure, de conserver la valeur de mesure $x_1$ analogique dans le circuit de lecture, par exemple dans une première capacité du circuit de lecture. Après avoir réalisé la deuxième mesure, la valeur de mesure $x_2$ analogique est également conservée dans le circuit de lecture, par exemple dans une deuxième capacité du circuit de lecture. Les valeurs de mesure analogiques sont ensuite soustraites via le calcul de la différence $x_1 - \alpha.x_2$, puis le résultat de cette soustraction est converti numériquement et délivré par le circuit de lecture. Cette variante évite de faire le calcul de la soustraction à l'extérieur du circuit de lecture, et divise par deux le nombre de données à sortir, pour le prix d'une banque de capacités de la taille du nombre de pixels lus en même temps.

Chaque élément de mesure thermosensible peut comporter au moins une capacité pyroélectrique formée par au moins une portion de matériau pyroélectrique disposée entre des première et deuxième électrodes.

Dans ce cas, l'une des première et deuxième électrodes de la capacité pyroélectrique de chaque pixel peut être formée par une portion électriquement conductrice commune à tous les pixels de la ligne à laquelle appartient ledit pixel.

De plus, la portion électriquement conductrice formant l'une des première et deuxième électrodes de tous les pixels d'une même ligne peut former également l'élément chauffant des pixels de la ligne.

En outre, l'autre des première et deuxième électrodes de la capacité pyroélectrique de chaque pixel peut être formée par une portion électriquement conductrice commune à tous les pixels de la colonne à laquelle appartient ledit pixel.

En variante, chaque élément de mesure thermosensible peut comporter au moins une thermistance ou au moins une diode, et/ou dans chaque pixel, l'élément de mesure thermosensible peut former l'élément chauffant.

Le circuit de lecture peut comporter au moins un amplificateur, par exemple un amplificateur différentiel monté en intégrateur. Le circuit de lecture peut comporter au moins un élément réalisant un CDS (« Correlated Double Sampling ») pour diminuer le bruit de lecture.

L'élément chauffant peut être apte à chauffer par effet Joule l'élément de mesure thermosensible de chaque pixel, et/ou l'élément chauffant peut être apte à émettre un rayonnement lumineux destiné à chauffer l'élément de mesure thermosensible des pixels.

L'invention porte également sur un capteur de motif thermique comportant plusieurs pixels comprenant chacun au moins un élément de mesure thermosensible, le capteur comprenant en outre :

- au moins un élément chauffant configuré pour chauffer l'élément de mesure thermosensible d'au moins un pixel lors d'une mesure par l'élément de mesure thermosensible dudit au moins un pixel ;
- au moins un circuit de lecture configuré pour lire des charges électriques délivrées par ledit au moins un pixel lors de la mesure par l'élément de mesure thermosensible dudit au moins un pixel ;
- des moyens de commande configurés pour mettre en œuvre un procédé de capture tel que décrit précédemment.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente plusieurs images successives obtenues lors de la lecture d'une empreinte digitale d'un doigt posé puis retiré d'un capteur thermique actif de l'art antérieur ;
- la figure 2 représente schématiquement un capteur de motif thermique, objet de la présente invention ;
- la figure 3 représente un premier exemple de réalisation d'un circuit de lecture d'un capteur de motif thermique, objet de la présente invention ;
- la figure 4A représente deux pixels d'un capteur de motif thermique, objet de la présente invention ;
- la figure 4B représente des signaux obtenus en sortie des deux pixels visibles sur la figure 4A, pendant et après une phase de chauffage des pixels ;
- la figure 5 représente la différence de signal obtenu entre un pixel sur lequel se trouve une vallée de l'empreinte et un pixel sur lequel se trouve une crête de l'empreinte, pendant et après un chauffage du pixel ;
- la figure 6 représente les charges électriques obtenues en sortie d'un pixel au cours d'un procédé de capture, objet de la présente invention ;
- la figure 7 représente, sous la forme d'un chronogramme, les différentes étapes mises en œuvre au cours d'un procédé de capture, objet de la présente invention ;
- les figures 8A-8C et 9A-9C représentent des images obtenues respectivement en considérant les résultats de la première lecture uniquement, de la deuxième lecture uniquement, et en soustrayant les résultats de la deuxième lecture à ceux de la première lecture ;
- les figures 10 et 11 représentent des fonctions de filtrage réalisées lors de la mise en œuvre d'un procédé de capture, objet de la présente invention ;
- la figure 12 représente un deuxième exemple de réalisation d'un circuit de lecture d'un capteur de motif thermique, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

Le procédé de capture de motif thermique est mis en œuvre en utilisant un capteur 100 de motif thermique tel que représenté schématiquement sur la figure 2.

Le capteur 100 comprend plusieurs pixels 102, chaque pixel 102 comprenant un élément de détection thermique, ou élément de mesure thermosensible.

Selon une première configuration du capteur 100, chaque pixel 102 comporte une capacité pyroélectrique 104 (visible sur la figure 3) qui forme l'élément de mesure thermosensible du pixel 102.

Le capteur 100 peut être réalisé à partir d'un substrat de verre, notamment lorsque le capteur 100 comporte des transistors TFT. En variante, le capteur 100 peut être réalisé à partir d'un substrat en semi-conducteur, par exemple en silicium, notamment lorsque le capteur 100 comporte des transistors réalisés en technologie MOS. Selon une autre variante, le substrat utilisé peut être un substrat souple, par exemple à base de polyimide ou de PEN (polyéthylène naphtalate) ou de PET (polyéthylène téréphtalate), sur lequel les éléments du capteur 100 sont avantageusement réalisés par technologie imprimée.

Les pixels 102 du capteur 100 peuvent être disposés en formant une matrice de plusieurs lignes et plusieurs colonnes de pixels 102, comme c'est le cas sur le schéma de la figure 2. Le pas des pixels 102, c'est-à-dire la distance entre les centres de deux pixels 102 voisins, est par exemple compris entre environ 25 $\mu$m et 100 $\mu$m.

La figure 3 décrit l'exemple d'un pixel 102 utilisant une capacité pyroélectrique 104 comportant une portion de matériau pyroélectrique 106 disposée entre une électrode inférieure 108 et une électrode supérieure 110. Le matériau pyroélectrique de la portion 106 est avantageusement du polyfluorure de vinylidène ou PVDF, ou du polyfluorure de vinylidène-trifluoroéthylène ou P(VDF-TrFE). En variante, le matériau pyroélectrique peut être de l'AIN ou du PZT, ou tout autre matériau pyroélectrique adapté pour former la capacité pyroélectrique 104. L'épaisseur de la portion 106 de matériau pyroélectrique est par exemple comprise entre environ 500 nm et 10 $\mu$m.

Les électrodes 108, 110 comportent chacune au moins un matériau électriquement conducteur, par exemple un matériau métallique tel que du titane d'épaisseur égale à environ 0,2 μm, et/ou du molybdène et/ou de l'aluminium et/ou un oxyde conducteur tel que de l'ITO (oxyde d'indium et d'étain) et/ou un polymère conducteur tel que du PEDOT:PSS. L'une des électrodes, avantageusement l'électrode supérieure 110, ou chacune des deux électrodes 108, 110, peut être formée par un empilement de plusieurs matériaux électriquement conducteurs, par exemple un empilement Ti / TiN / AlCu. L'épaisseur de chacune des électrodes 108, 110 est par exemple comprise entre environ 0,05 μm et 1 μm.

Le capteur 100 comporte également des éléments chauffants 112 dissipant une certaine quantité de chaleur dans les pixels 102, et notamment dans la portion 106 de matériau pyroélectrique. Ces éléments chauffants 112 sont par exemple des éléments conducteurs rapportés à côté ou au-dessus des capacités pyroélectriques 104, formés avantageusement à partir de l'une des couches conductrices servant à la réalisation de l'une des électrodes 108, 110 des capacités pyroélectriques 104.

Une couche de protection, correspondant par exemple à une couche d'AlN ou de tout autre matériau adapté à la réalisation de cette couche, est disposée au-dessus des électrodes supérieures 110 des pixels 102. L'épaisseur de la couche de protection peut être comprise entre environ 100 nm et environ 100 μm. Une face supérieure de la couche de protection correspond à la surface de capture du capteur 100 au-dessus de laquelle se trouve le motif thermique destiné à être détecté, par exemple un doigt dont l'empreinte est destinée à être détectée et qui est en contact avec la surface de capture du capteur 100.

Selon une variante de réalisation avantageuse, l'une des électrodes 108, 110 de la capacité pyroélectrique 104 de chacun des pixels 102 d'une même ligne de la matrice est formée par une même portion électriquement conductrice qui est donc commune à tous les pixels 102 de cette ligne. De plus, il est également possible que ces portions électriquement conductrices communes aux pixels d'une même ligne forment également les éléments chauffants 112 des pixels 102. Des détails de réalisation d'un tel capteur sont décrits dans le document WO 2017/093179 A1.

De plus, il est possible que le capteur 100 comporte une matrice de pixels 102 dite « passive », c'est-à-dire ne comportant pas de transistor au sein de pixels 102, et avec dans ce cas l'autre des première et deuxième électrodes 108, 110 de la capacité pyroélectrique de chaque pixel 102 qui est formée par une portion électriquement conductrice commune à tous les pixels de la colonne à laquelle appartient ledit pixel. Des détails de réalisation d'un tel capteur sont décrits dans le document WO 2018/020176 A1.

L'élément chauffant 112 est par exemple apte à chauffer par effet Joule l'élément de mesure thermosensible de chaque pixel 102. Le chauffage de la portion 106 de matériau pyroélectrique est obtenu dans ce cas en faisant circuler un courant dans l'élément conducteur formant l'élément chauffant 112. L'intensité du chauffage obtenu dépend notamment de l'intensité du courant parcourant l'élément conducteur.

La valeur de la tension de chauffage appliquée sur l'élément conducteur, et donc l'intensité du courant circulant dans l'élément conducteur, est ajustée par rapport à la résistivité du matériau conducteur utilisé afin de produire l'énergie thermique désirée dans les pixels 102. La puissance dissipée par pixel peut avantageusement être comprise entre environ 0,05 mW et 1 mW.

En variante, des éléments chauffants 112 autres que des éléments résistifs peuvent être utilisés, comme par exemple des éléments de chauffage optique. Par exemple, une ou plusieurs LED telles que des diodes laser, peuvent émettre un rayonnement qui est transmis par le substrat et absorbé par le matériau pyroélectrique des pixels 102, et/ou par l'une des électrodes 108, 110 des pixels 102, et/ou par une couche d'absorption spécifique, par exemple composée d'ITO partiellement oxydé, de carbone, de chrome oxydé, ou encore d'un polymère chargé de pigment coloré, ajoutée à proximité de l'une des électrodes 108, 110 ou directement sur l'une des électrodes 108, 110. Par exemple, dans le cas d'un chauffage par rayonnement infrarouge, des électrodes 108, 110 en titane et/ou en ITO peuvent être avantageusement utilisées pour absorber ce rayonnement. De manière avantageuse, le rayonnement peut être absorbé par la couche de protection.

Il est possible que l'une des électrodes 108, 110 de tous les pixels 102, par exemple l'électrode supérieur 110 de tous les pixels 102, forment ensemble une couche électriquement conductrice continue qui soit isolée des éléments chauffants 112 par une couche diélectrique. Cette couche électriquement conductrice continue forme dans ce cas une couche de blindage qui a pour avantage de permettre d'allumer ou éteindre le chauffage pendant que les éléments de mesure thermosensible réalisent une intégration de charges électriques, sans perturber cette intégration de charges. Une telle couche de blindage limite aussi les perturbations subies par le capteur 100, notamment celles de fréquence égale à 50 Hz.

En variante, cette couche de blindage peut être distinctes des électrodes 108, 110 des pixels 102, et est par exemple disposée entre les éléments de mesure thermosensibles du capteur 100 et la surface de capture du capteur 100.

Selon d'autres configurations du capteur 100, il est possible que les éléments de mesure thermosensibles du capteur 100 ne correspondent pas à des capacités pyroélectriques, mais correspondent par exemple à des thermistances, des diodes, ou tout autre élément thermosensible adapté.

Outre les éléments de mesure thermosensibles, le capteur 100 comporte également des moyens de commande 114 permettant de commander le chauffage et les phases de lecture des pixels 102.

Le capteur 100 comporte également un circuit de lecture 116 permettant de lire les charges électriques délivrées en sortie de chaque pixel 102, et donc lire le motif thermique détecté par le capteur 100.

En variante, le capteur 100 peut comporter un circuit de commande et de lecture 116 externe au plan dans lequel se trouve la matrice de pixels 102.

La figure 3 représente un premier exemple de réalisation d'une partie du circuit de lecture 116, et plus précisément des éléments électroniques permettant de lire les charges électriques délivrées par la capacité pyroélectrique 104 de l'un des pixels 102 du capteur 100.

Le pixel 102 représenté sur la figure 3 comporte la capacité pyroélectrique 104 formée par la portion 106 de matériau pyroélectrique disposée entre les deux électrodes 108, 110. L'électrode inférieure 108 est reliée à la masse et l'électrode supérieure 110 forme une électrode de lecture du pixel 102 et est reliée à un nœud actif 118 du pixel 102.

Lorsque l'élément de mesure thermosensible est par exemple une thermistance, ou tout autre élément de mesure thermosensible dont le courant varie avec la température, cet élément comporte également une borne reliée au nœud actif 118 du pixel 102.

Le nœud actif 118 est relié à une entrée du circuit de lecture 116 se trouvant en pied de colonne de la matrice de pixels 102. Dans l'exemple décrit ici, les capacités pyroélectriques 104 de tous les pixels 102 d'une même colonne sont reliées en parallèle à une même entrée du circuit de lecture 116. Cette entrée du circuit de lecture 116 correspond à l'entrée inverseuse d'un amplificateur de lecture 120 correspondant par exemple à un amplificateur différentiel tel qu'un amplificateur opérationnel. Un potentiel électrique de polarisation $V_{ref}$ est appliqué sur l'entrée non inverseuse de l'amplificateur 120. La sortie de l'amplificateur 120 est rebouclée sur son entrée inverseuse par l'intermédiaire d'une capacité 122. Un interrupteur, ou commutateur, 124 est relié en parallèle à la capacité 122 et permet de court-circuiter la capacité 122 pour réaliser la remise à zéro de l'intégrateur et décharger la capacité 122. La sortie de l'amplificateur de lecture 120 est également reliée à l'entrée d'un circuit 126 pouvant réaliser une opération de type CDS, puis une amplification du signal obtenu et ensuite une conversion analogique/numérique.

Lorsque les éléments de mesure thermosensibles du capteur 100 correspondent à des thermistances, les thermistances de tous les pixels 102 d'une même colonne peuvent être reliées en série à une même entrée du circuit de lecture 116. Ce circuit de lecture 116 est dans ce cas adapté pour réaliser une lecture du courant délivré. Ce circuit de lecture 116 comporte par exemple une résistance qui est traversé par le courant délivré. Le courant peut être lu via une lecture de la tension aux bornes de cette résistance. Un tel circuit de lecture 116 peut également être utilisé lorsque les éléments de mesure thermosensibles du capteur 100 correspondent à des diodes.

L'intégrateur de courant formé par l'amplificateur 120, la capacité 122, et l'interrupteur 124 sont communs à tous les pixels 102 d'une même colonne. Le circuit 126 peut être commun à tous les pixels 102 du capteur 100, moyennant l'ajout d'éléments électroniques de multiplexage entre les sorties des amplificateurs de lecture 120 et le circuit 126.

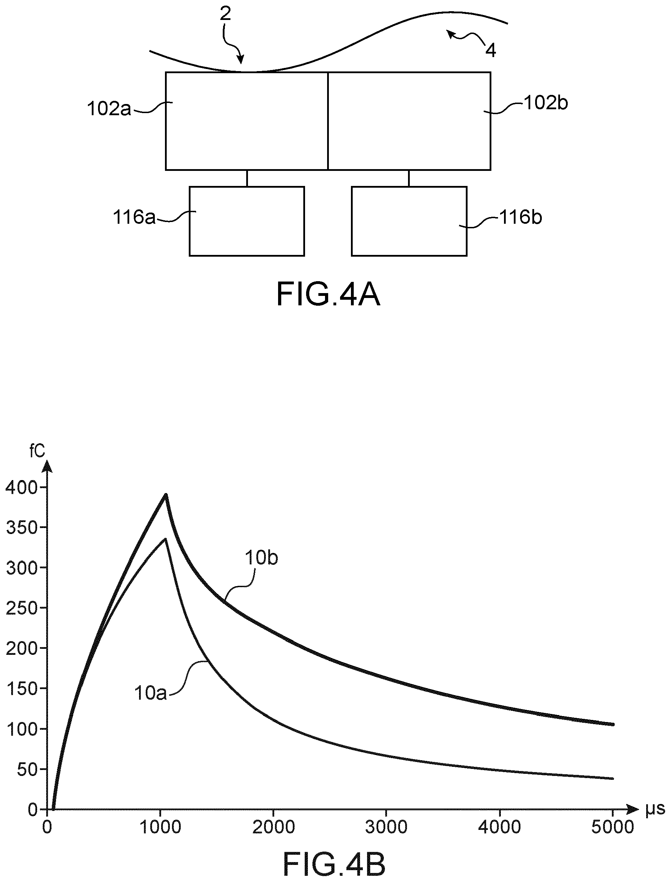

Afin de faciliter la compréhension du procédé de capture mis en œuvre ici, on décrit ci-dessous, en lien avec les figures 4A et 4B, les températures de deux pixels 102a, 102b pendant et après une phase de chauffage simultané des deux pixels 102a, 102b. La courbe 10a visible sur la figure 4B correspond au signal délivré par le premier pixel 102a sur lequel se trouve une crête 2 d'une empreinte digitale, et la courbe 10b correspond au signal délivré par le second pixel 102b lorsqu'une vallée 4 de l'empreinte digitale est présente en face, ou en regard, du second pixel 102b. Il n'y a donc pas de contact entre la peau et ce second pixel 102b. Les deux pixels 102a, 102b correspondent à deux des pixels 102 du capteur 100. Les courbes 10a et 10b représentent les températures obtenues lorsque le chauffage débute à un instant égal à 50 μs et est stoppé à un instant égal à 1050 μs.

Pendant le chauffage, des charges sont générées dans les deux pixels 102a, 102b. Du fait que la tension aux bornes de la capacité pyroélectrique de chaque pixel 102a, 102b est maintenue constante par les intégrateurs de courant des circuits de lecture 116a, 116b, les charges sont copiées sur les capacités 122 et donc les tensions aux bornes des capacités 122 augmentent. De plus, du fait que de la chaleur est absorbée par la peau de la crête 2 de l'empreinte présente sur le premier pixel 102a, la valeur de la tension de la capacité 122 du premier pixel 102a augmente de manière moins importante que celle du second pixel 102b qui est en face de la vallée 4 et n'est donc pas en contact avec la peau.

La courbe visible sur la figure 5 correspond à la différence entre les valeurs des signaux de mesure obtenus entre le pixel 102b et le pixel 102a, qui est représentative du contraste entre les deux pixels 102a, 102b.

En raison du temps de propagation de la chaleur dans un pixel qui est chauffé, il existe une certaine inertie thermique dans ce pixel. Ce phénomène s'illustre sur la figure 5 par le fait que la différence de signal augmente encore après l'arrêt du chauffage (qui se produit à t = 1050 μs), jusqu'à une durée égale à 2000 μs sur l'exemple de la figure 5. Ensuite, on constate que la pente de cette courbe devient négative : le premier pixel 102a refroidit moins vite que le second pixel 102b, et donc la différence entre les signaux délivrés par les deux pixels 102a, 102b diminue.

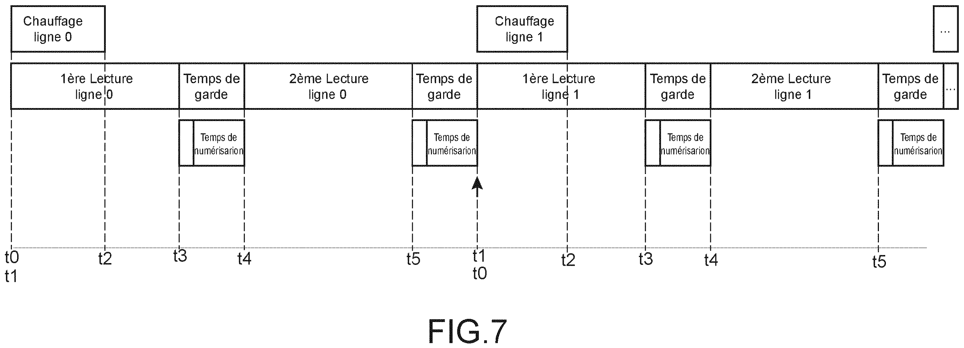

On décrit ci-dessous, en lien avec les figures 6 et 7, le procédé de capture mis en œuvre selon un mode de réalisation particulier.

La courbe 14a visible sur la figure 6 correspond au signal délivré par le premier pixel 102a sur lequel se trouve une crête 2 d'une empreinte, et la courbe 14b correspond au signal délivré par le second pixel 102b en regard duquel se trouve une vallée 4 de l'empreinte, lors de la mise en œuvre du procédé. La figure 7 représente, sous la forme d'un chronogramme, les différentes étapes mises en œuvre au cours du procédé.

Le procédé décrit ci-dessous est mis en œuvre ligne par ligne, c'est-à-dire mis en œuvre simultanément pour tous les pixels 102 d'une même ligne du capteur. Les étapes sont répétées pour chacune des lignes de pixels du capteur. D'autres variantes de mise en œuvre sont toutefois possibles, par exemple en réalisant une lecture pixel par pixel, ou groupe de pixels par groupe de pixels avec des groupes de pixels qui ne correspondent pas à une seule ligne de pixels.

Pour un circuit de lecture 116 tel que représenté sur la figure 3, les interrupteurs 124 sont préalablement fermés. Les capacités d'intégration 122 sont alors déchargées, le potentiel à leurs bornes devient nul et le potentiel en sortie de l'intégrateur de charge devient donc égal à Vref.

Le chauffage de l'élément de mesure thermosensible des pixels 102 de la ligne lue débute à un instant $t_0$ ($t_0$ = 50 $\mu$s sur la figure 6), en faisant passer un courant dans les éléments chauffants 112 des pixels 102 lus.

Une première lecture des charges électriques délivrées par les pixels 102 de la ligne lue est ensuite mise en œuvre pendant une première durée de mesure débutant à un instant $t_1$ correspondant à l'instant auquel les interrupteurs 124 des pixels 102 de la ligne lue s'ouvrent ($t_1 = t_0$ = 50 $\mu$s dans l'exemple décrit ici) et se terminant à l'instant $t_3$ où la valeur de la tension des capacités 122 est lue. L'intégration des charges électriques générées dans les capacités pyroélectriques des pixels 102 de la ligne lue est réalisée pendant une première durée de mesure. Du fait que les interrupteurs 124 soient ouverts, les charges électriques générées par les capacités pyroélectriques des pixels 102 lus s'écoulent vers les capacités 122 auxquelles les pixels 102 lus sont reliés.

De manière avantageuse, le chauffage débute avant le début de la première lecture des charges électriques afin de limiter les perturbations électroniques engendrées par la commutation des éléments réalisant le chauffage. De plus, la différence entre les signaux de mesure des deux pixels 102a, 102b est négligeable en début d'intégration, la chaleur n'ayant pas eu le temps d'atteindre la surface du capteur 100, les deux pixels 102a, 102b ayant donc un comportement similaire. Toutefois, il est envisageable que le chauffage débute après le début de la première lecture des charges électriques (avec dans ce cas $t_1 < t_0$).

Dans un élément de mesure correspondant à une capacité pyroélectrique 104, la variation de charge $\Delta Q$ créée est proportionnelle à la variation de température $\Delta T$ subie par la capacité pyroélectrique 104 et peut être exprimée par l'équation suivante :

$$\Delta Q = \gamma \cdot S \cdot \Delta T,$$

avec $\gamma$ correspondant au coefficient pyroélectrique du matériau pyroélectrique 106 de la capacité pyroélectrique 104 et S sa surface.

La variation de température subie par chacune des capacités pyroélectriques 104 du capteur 100 est différente selon qu'une crête ou qu'une vallée de l'empreinte se trouve au-dessus de la capacité pyroélectrique. La variation de température subie par une capacité pyroélectrique 104 sur laquelle se trouve une crête de l'empreinte est appelée $\Delta T_{crête}$, et la variation de température subie par une capacité pyroélectrique 104 sur laquelle se trouve une vallée de l'empreinte est appelée $\Delta T_{vallée}$.

Lorsque les éléments de mesure thermosensibles sont des thermistances ou plus généralement des éléments de mesure thermosensibles générant un courant dont la valeur dépend de la température, comme par exemple des diodes, le courant I obtenu dépend de la température selon une fonction f, c'est-à-dire I = f(T). Ce courant peut également s'exprimer en fonction d'une valeur particulière mesurée à une température $T_0$, avec dans ce cas $I = I_0.f(T_0, \Delta T)$.

A l'instant $t_1$, la valeur du courant dans une thermistance sur laquelle se trouve une crête de l'empreinte est appelée $I_{crête\_t1}$ et la valeur du courant dans une thermistance sur laquelle se trouve une vallée de l'empreinte est appelée $I_{vallée\_t1}$. Les valeurs des courants générés par les thermistances sont lues à l'instant $t_1$.

Dans l'exemple de réalisation décrit ici, au cours de la première durée de mesure, le chauffage est stoppé. Le chauffage est stoppé à un instant $t_2$. La durée de chauffage $t_2 - t_0$ est par exemple égale à 1000 $\mu$s.

A partir de l'arrêt du chauffage (instant $t_2$), les charges générées par les capacités pyroélectriques 104 des pixels 102 lus commencent à diminuer du fait que les pixels 102 se refroidissent. Toutefois, en raison de l'inertie thermique existante dans le capteur 100, la valeur du contraste continue d'augmenter (comme précédemment décrit en lien avec la figure 5) pendant une certaine durée après l'instant $t_2$, c'est-à-dire après avoir arrêté le chauffage. Il est donc avantageux de prolonger l'intégration des charges pendant cette durée, jusqu'à ce que le contraste diminue.

La première lecture des charges générées est stoppée à un instant $t_3$. La première durée de mesure (égale à $t_3 - t_1$) est par exemple égale à 2000 $\mu$s. La valeur de l'instant $t_3$ peut être choisie judicieusement afin que la fin de la première lecture corresponde au moment où le contraste entre un pixel 102 sur lequel se trouve une crête de l'empreinte et un pixel 102 sur lequel se trouve une vallée de l'empreinte commence à diminuer (2000 $\mu$s sur l'exemple de la figure 5). Il est toutefois possible de choisir une durée d'intégration, ou durée de mesure, proche de la durée du chauffage, par exemple comprise entre environ 1000 $\mu$s et 1300 $\mu$s.

A la fin de cette première durée de mesure, les capacités pyroélectriques ont été soumises à une certaine variation de température, les charges électriques générées par la capacité pyroélectrique et stockées dans chacune des capacités 122 étant la conséquence de cette variation de température. La valeur mesurée par cette première est appelée $x_1$.

Le potentiel électrique en sortie de l'amplificateur 120 est donc $V_{out} = Q/C_{ref} + V_{ref}$, avec Q correspondant aux charges électriques générées pendant la première durée de mesure et $C_{ref}$ la valeur de la capacité 122. Ce potentiel est alors lu et échantillonné par le convertisseur analogique / numérique du circuit 126 ou mémorisé dans une autre capacité.

La valeur de la charge électrique générée par une capacité pyroélectrique 104 sur laquelle se trouve une crête de l'empreinte, à l'instant $t_3$, est :

$$Q_{crête\_t3} = \gamma \,.\, S \,.\, \Delta T_{crête},$$

et la valeur de la charge électrique par une capacité pyroélectrique 104 sur laquelle se trouve une vallée de l'empreinte, à l'instant $t_3$, est :

$$Q_{vallée\_t3} = \gamma \,.\, S \,.\, \Delta T_{vallée},$$

A l'instant $t_3$, le contraste obtenu entre un pixel sur lequel se trouve une crête de l'empreinte et un pixel sur lequel se trouve une vallée de l'empreinte est donc :

$$Contraste = Q_{crête\_t3} - Q_{vallée\_t3}$$

$$Contraste = \gamma \,.\, S \,.\, (\Delta T_{crête} - \Delta T_{vallée}).$$

Le contraste obtenu est donc linéaire vis-à-vis de la différence de variations de température entre un pixel sur lequel se trouve une crête de l'empreinte et un pixel sur lequel se trouve une vallée de l'empreinte.

Lorsque les éléments de mesure thermosensibles sont des thermistances (ou plus généralement des éléments de mesure thermosensibles générant un courant dont la valeur dépend de la température), les courants générés sont lus aux l'instants $t_1$ et $t_3$. La valeur du courant dans une thermistance sur laquelle se trouve une crête de l'empreinte, à l'instant $t_3$, est :

$$I_{crête\_t3} = I_{crête\_t1} \,.\, f(T_{crête}, \Delta T_{crête\_t3}),$$

et la valeur du courant dans une thermistance sur laquelle se trouve une vallée de l'empreinte, à l'instant $t_3$, est :

$$I_{vallée\_t3} = I_{vallée\_t1} \,.\, f(T_{vallée}, \Delta T_{vallée\_t3}),$$

Etant donné que la fonction f est localement linéaire sur le domaine de température considéré, c'est-à-dire des variations inférieures à quelques degrés Kelvin, cette fonction peut s'écrire sous la forme $f(T_0, \Delta T) = a(T_0 + \Delta T) + b$. La différence de courant entre les instants $t_3$ et $t_1$ vaut :

$$\Delta I_{crête\_t3} = I_{crête\_t3} - I_{crête\_t1} = I_{crête\_t1} \,.\, a \,\Delta T_{crête\_t3},$$

$$\Delta I_{vallée\_t3} = I_{vallée\_t3} - I_{vallée\_t1} = I_{vallée\_t1} \,.\, a \,\Delta T_{vallée\_t3},$$

A l'instant $t_3$, le contraste obtenu entre un pixel sur lequel se trouve une crête de l'empreinte et un pixel sur lequel se trouve une vallée de l'empreinte est donc :

$$Contraste\_t_3 = \Delta I_{crête\_t3} - \Delta I_{vallée\_t3}$$

En supposant que les températures initiales des pixels crête et vallée sont sensiblement égales :

$$I_{crête\_t1} \approx I_{vallée\_t1} \approx I_{t1}$$

Le contraste obtenu peut donc s'écrire selon l'équation :

$$Contraste\_t_3 = a.I_{t1}.(\Delta T_{crête\_t3} - \Delta T_{vallée\_t3}).$$

Le contraste obtenu est donc linéaire vis-à-vis de la différence de variations de température entre un pixel sur lequel se trouve une crête de l'empreinte et un pixel sur lequel se trouve une vallée de l'empreinte, comme pour les capacités pyroélectriques. Le contraste obtenu à l'instant $t_3$ a une valeur positive.

A la fin de la première durée de mesure, il est possible de prévoir un temps de garde (compris entre les instants $t_3$ et $t_5$ sur la figure 7) pendant lequel les données acquises sont sorties, converties, échantillonnées, etc. Durant ce temps de garde, l'interrupteur 124 est commuté en position fermée pour décharger la capacité 122. Sur la figure 6, cette réinitialisation se traduit par une remise à zéro des charges lues, c'est-à-dire ici les charges accumulées dans la capacité d'intégration 122. Ce temps de garde permet avantageusement d'éviter que les perturbations électriques qui pourraient être générées par le convertisseur analogique / numérique du circuit 126 ne perturbe les intégrateurs de charges.

Après cette réinitialisation, une deuxième lecture des charges électriques délivrées par les pixels 102 de la ligne lue est mise en œuvre pendant une deuxième durée de mesure débutant à un instant $t_4$ et s'achevant à un instant $t_5$. Dans l'exemple décrit ici, la deuxième durée de mesure $t_5 - t_4$ est égale à la première durée de mesure $t_3 - t_1$.

Contrairement à la première lecture qui est réalisée en partie pendant le chauffage des pixels 102, cette deuxième lecture est mise en œuvre sans chauffer les pixels 102 de la ligne lue.

L'interrupteur 124 est ouvert à l'instant $t_4$. L'intégration débute alors au niveau de la capacité pyroélectrique 104 des pixels 102 de la ligne lue, pendant la deuxième durée de mesure. Des charges électriques continuent d'être générées par la capacité pyroélectrique du pixel 102 pendant cette deuxième durée de mesure, mais ces charges sont ici négatives, comme cela est visible sur la figure 6, du fait que les pixels 102 sont dans une phase de refroidissement. La valeur mesurée par cette deuxième lecture est appelée $x_2$.

Le contraste obtenu lors de la deuxième mesure est de la même manière inversé, du fait de la linéarité et que l'on considère que les variations de température sont similaires pour les pixels pyroélectriques et les pixels à thermistances. Pour des pixels à thermistances, le contraste obtenu peut s'écrire selon l'équation :

$$Contraste\_t_5 = a.I_{t1}.(\Delta T_{crête\_t5} - \Delta T_{vallée\_t5}).$$

Le contraste obtenu à l'instant $t_5$ a une valeur négative.

La soustraction réalisée à l'issue des deux mesures revient donc à soustraire les contrastes des deux mesures, et s'exprime par l'équation :

$$Contraste\_t_5 - Contraste\_t_3 = a.I_{t1}.((\Delta T_{crête\_t5} - \Delta T_{crête\_t3}) - (\Delta T_{vallée\_t5} - \Delta T_{vallée\_t3})).$$

Pour chaque pixel 102 lu, une différence entre les deux valeurs $x_1$ et $x_2$ mesurées est ensuite calculée. Le calcul de cette différence peut être réalisé à l'extérieur du circuit de lecture 116, c'est-à-dire après avoir réalisé une conversion analogique - numérique de chacune des valeurs de mesure $x_1$ et $x_2$.

En variante, il est possible, après avoir réalisé la première mesure $x_1$, de conserver la valeur de mesure $x_1$ analogique dans le circuit de lecture 116, par exemple dans une première capacité du circuit de lecture 116. Après avoir réalisé la deuxième mesure, la valeur de mesure $x_2$ analogique est également conservée dans le circuit de lecture 116, par exemple dans une deuxième capacité du circuit de lecture 116. Les valeurs de mesure analogiques sont ensuite soustraites via le calcul de la différence entre les deux valeurs $x_1$ et $x_2$, puis le résultat de cette soustraction est converti numériquement et délivré par le circuit de lecture 116.

Du fait que la différence entre les deux pixels 102a, 102b est négative pour la deuxième lecture $x_2$, alors qu'elle était positive pour la première lecture $x_1$, la différence se traduit par un contraste encore plus élevé, alors qu'un contraste plus faible aurait été obtenu si une seule lecture avait été faite entre les instants $t_1$ et $t_5$.

En outre, le calcul de cette différence permet de supprimer du résultat obtenu les signaux correspondant à du bruit et qui ne sont pas pertinents pour la capture réalisée, du fait que ces signaux ont le même impact sur les deux lectures réalisées. Le calcul de cette différence permet notamment d'annuler au moins une partie du FPN (« fixed pattern noise », ou bruit à motif fixe) du capteur 100, c'est-à-dire tout offset constant introduit en sortie du capteur 100, mais aussi tout courant de fuite constant présent dans le capteur 100.

La soustraction réalisée à l'issue des deux mesures revient donc ici à additionner les contrastes des deux mesures, tout en supprimant les effets des signaux parasites qui ont un même impact dans les première et deuxième lectures.

De manière générale, les valeurs des différents instants $t_0$ à $t_5$, c'est-à-dire les durées des différentes phases du procédé (chauffage, première lecture, deuxième lecture) sont adaptées en fonction de la structure du capteur 100.

Les étapes décrites ci-dessus sont répétées pour les autres lignes de pixels du capteur 100. Sur la figure 7, ces étapes sont visibles pour une deuxième ligne de pixels.

Un temps de garde peut être respecté entre les lectures de deux lignes de pixels successives. Si le capteur 100 comporte une matrice passive de pixels 102, c'est-à-dire des pixels 102 ne comportant pas de transistors permettant d'adresser en lecture les pixels (comme c'est le cas sur la figure 3), ce temps de garde est utilisé pour laisser refroidir la ligne de pixels qui vient d'être lue.

Dans le procédé décrit ci-dessus, la première durée de mesure est égale à la deuxième durée de mesure. En variante, il est possible que ces deux durées de mesure soient différentes l'une de l'autre. Dans ce cas, la soustraction réalisée entre les deux valeurs $x_1$ et $x_2$ obtenues lors des deux lectures de chaque pixel 102 peut être réalisée en pondérant ces deux valeurs des deux signaux en fonction de la différence entre les première et deuxième durées de mesure. Dans ce cas, en considérant que la différence calculée est $x_1 - \alpha.x_2$, la valeur de a étant égale à la valeur du rapport de la première durée de mesure sur la deuxième durée de mesure. Cela permet d'annuler les signaux parasites basse fréquence considérés constants malgré la différence entre les deux durées de mesure. Le FPN n'est dans ce cas plus complètement corrigé par le calcul de cette différence pondérée, mais il est possible de le corriger complètement de manière logicielle par une calibration en usine.

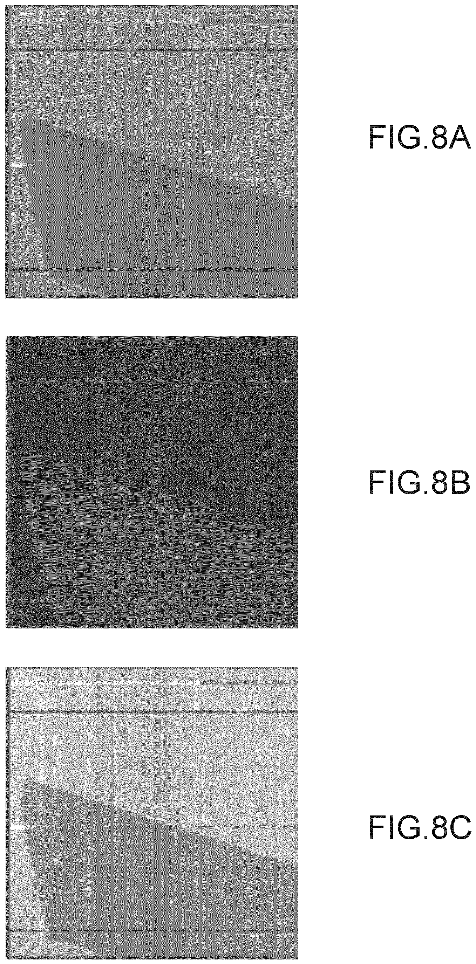

La figure 8A représente une image calculée en ne tenant compte que des valeurs $x_1$ de la première lecture. La figure 8B représente une image calculée en ne tenant compte que des valeurs $x_2$ de la deuxième lecture (les contrastes entre les figures 8A et 8B sont inversés du fait que lors de la deuxième lecture, les pixels sont dans une phase de refroidissement alors que lors de la première lecture, les pixels sont dans une phase d'échauffement). La figure 8C représente une image calculée à partir des résultats des différences entre les valeurs $x_1$ et les valeurs $x_2$. Ces figures illustrent bien le fait qu'un meilleur contraste est obtenu pour l'image calculée à partir des résultats des différences entre les valeurs $x_1$ et les valeurs $x_2$.

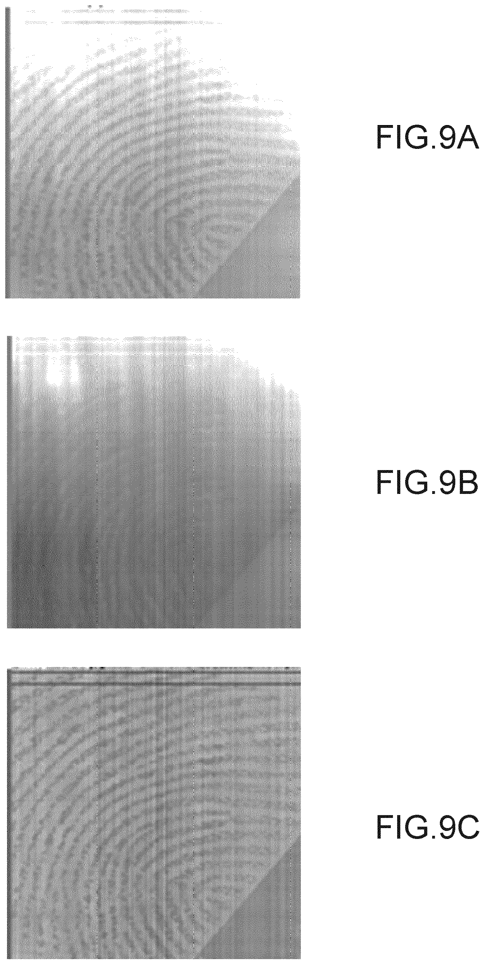

Les figures 9A-9C représentent, de manière analogue aux figures 8A-8C, les images obtenues respectivement en considérant les résultats de la première lecture uniquement, de la deuxième lecture uniquement, et en soustrayant les résultats de la deuxième lecture à ceux de la première lecture.

La soustraction réalisée entre les résultats de la première lecture et ceux de la deuxième lecture, lorsque les première et deuxième durées de mesure sont identiques, permet également d'appliquer un filtrage dont la norme de la fonction de transfert H pour la fréquence f, H(f) peut s'exprimer sous la forme de l'équation suivante :

$$H(f) = sinc(f.T_{int}) * 2 * \sin(2.\pi.f.\delta_t)$$

avec :

$$sinc(x) = \frac{\sin(\pi x)}{\pi x},$$

- $T_{int}$ le temps d'intégration, c'est-à-dire la durée de l'une des première et deuxième lectures,
- $\delta t$ la moitié de la durée $t_4 - t_1$, c'est-à-dire la moitié de la durée entre le début de la première lecture et le début de la deuxième lecture.

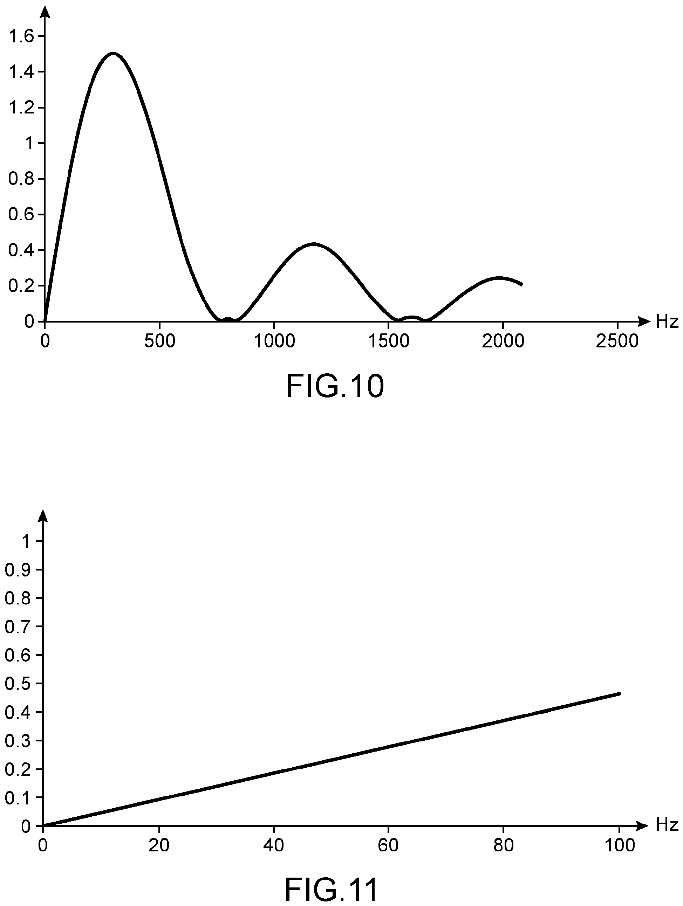

La figure 10 représente la fonction H obtenue lorsque la durée de chacune des deux lectures est égale à 1200 $\mu$s, avec un temps de garde entre chaque lecture égal à 100 $\mu$s. Avec ce filtre, les signaux parasites dus à l'environnement électromagnétique et dont les fréquences sont comprises entre 50 Hz et 60 Hz sont atténués avec un facteur compris entre 2 et 3. Les fréquences des autres signaux passifs ou parasites générés par exemple lors de l'acquisition d'une image d'une empreinte digitale sont inférieures à environ 10 Hz. Un tel filtre permet d'avoir une atténuation très importantes de ces signaux parasites (facteur d'atténuation par exemple supérieur à 20).

La figure 11 représente la fonction H obtenue lorsque la durée de chacune des deux lectures est égale à 700 $\mu$s, avec un temps de garde entre chacune des lectures égale à 50 $\mu$s. La figure 11 montre que dans ce cas, l'atténuation des signaux de fréquences inférieures à 10 Hz est encore plus importante que celle obtenue dans la configuration dont la fonction de filtrage est représentée sur la figure 10.

Pour toutes les configurations précédemment décrites, le procédé décrit précédemment peut être mis en œuvre en réalisant en outre une opération de type CDS (« Correlated Double Sampling »). Dans ce cas, les valeurs (charge ou courant) des pixels sont lues au début de chacune des lectures. Ces valeurs sont ensuite soustraites à la fin de chacune des lectures. Une telle opération permet de supprimer une grande partie du bruit fixe présent dans les pixels.

La valeur de $\alpha$ peut être différente de celle du rapport entre la première durée de mesure et la deuxième durée de mesure. En modifiant ainsi la valeur du paramètre a, il est possible de donner plus ou moins d'importance à l'une ou l'autre des valeurs $x_1$ et $x_2$, c'est-à-dire à la mesure réalisée majoritairement lors du chauffage du pixel ou celle réalisée majoritairement lors du refroidissement du pixel. Il est possible d'avoir un paramètre $\alpha$ de valeur supérieure à 1 ou inférieure à 1.

Par exemple, dans le cas d'une capture d'un motif thermique correspondant à celui d'une empreinte de peau, et avec une première durée de mesure égale à la deuxième durée de mesure, le choix de la valeur du paramètre $\alpha$ à une valeur supérieure à 1 permet de donner plus d'importance au résultat de la deuxième mesure réalisée au moins en partie pendant le refroidissement du pixel dans la différence $x_1 - \alpha.x_2$ calculée. Du fait que le signal de mesure obtenu lors du refroidissement du pixel fait intervenir des couches plus profondes de peau grâce au temps de mesure plus long, la chaleur ayant eu plus de temps pour se propager, il est ainsi possible d'augmenter l'importance de ces couches profondes dans le résultat final par rapport aux premières couches superficielles de peau. En variante, en prenant une valeur du paramètre $\alpha$ inférieure à 1, une importance plus importante est donnée à la première mesure réalisée pour les couches de peau superficielles.

Selon un deuxième exemple, en présence d'un bruit constant sous la forme d'une même quantité de charges non désirées injectées dans chaque pixel, qui ne dépend pas de la durée d'acquisition, il peut être judicieux d'avoir la valeur du paramètre $\alpha = 1$ même lorsque les durées des première et deuxième lectures ne sont pas identiques. Ainsi, ce bruit fixe n'est pas présent dans la différence $x_1 - \alpha.x_2$.

Dans le mode de réalisation particulier précédemment décrit en lien avec la figure 2, les pixels ne comportent pas de transistor de sélection de ligne, et l'adressage des pixels est réalisé, lors de la lecture, par le chauffage de la ligne souhaitée de pixels.

En variante, il est possible que chaque pixel 102 comporte un transistor de sélection de ligne. La grille d'un tel transistor de sélection de ligne peut dans ce cas être reliée à un fil commun à tous les transistors de sélection de ligne des pixels d'une même ligne et sur lequel un signal de sélection est destiné à être appliqué. Une première des électrodes de source et de drain du transistor de sélection de ligne peut est reliée au nœud actif 118 et une deuxième des électrodes de source et de drain du transistor de sélection de ligne peut être reliée à une entrée du circuit de lecture 116.

Dans une telle variante, le fonctionnement du capteur 100 est similaire à celui précédemment décrit, hormis le fait que le transistor de sélection de ligne est mis à l'état passant lors de la lecture de la ligne de pixels à laquelle il appartient.

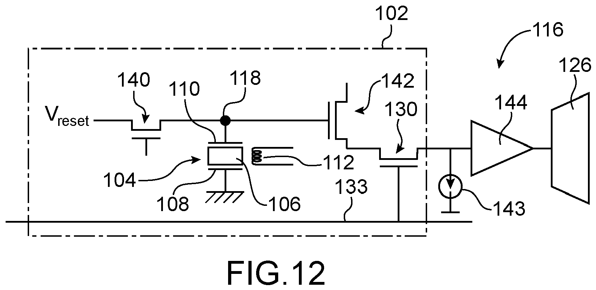

D'autres configurations de pixels peuvent également être envisagées, comme par exemple celle représentée sur la figure 12 permettant de lire en tension les mesures des pixels 102 du capteur (lecture dite « active » de pixel).

Comme dans l'exemple de réalisation précédemment décrit en lien avec la figure 3, chaque pixel 102 comporte la capacité pyroélectrique reliée au nœud actif 118, ainsi qu'un transistor de sélection de ligne 130 commandé via une ligne 133 de sélection de ligne. Chaque pixel 102 est également pourvu d'un transistor de réinitialisation 140 dont l'une des électrodes de source et de drain est reliée au nœud 118 et dont l'autre des électrodes de source et de drain est soumise à l'application d'une tension de réinitialisation $V_{reset}$. Un signal de commande de réinitialisation du pixel 102 est appliqué sur la grille du transistor de réinitialisation 140. Cette réinitialisation permet de mettre le potentiel électrique du nœud 118 à une valeur connue (ici $V_{reset}$) au début de l'intégration, ainsi que de vider les charges de la capacité pyroélectrique 104 une fois la lecture terminée. Comme pour la commande du transistor 130 de sélection de ligne de pixels, la commande du transistor de réinitialisation 140 peut être commune à toute une ligne de pixels 102.

Contrairement au précédent exemple de réalisation dans lequel le nœud 118 est directement relié au circuit de lecture 116, le nœud 118 est ici relié à une grille d'un autre transistor 142 formant un suiveur de tension et réalisant une amplification du signal lu, c'est-à-dire du potentiel de l'électrode 110, évoluant avec les charges électriques générées par la capacité pyroélectrique 104 du pixel 102. Un potentiel électrique d'alimentation est appliqué sur une première des électrodes de source et de drain du transistor 142 et une deuxième des électrodes de source et de drain du transistor 142 est reliée à la première des électrodes de source et de drain du transistor 130. Une deuxième des électrodes de source et de drain du transistor 130 est reliée à l'entrée du circuit de lecture 116 formé d'un amplificateur 144, inverseur ou non, de gain G. La sortie de l'amplificateur 144 est reliée à l'entrée du convertisseur analogique/numérique 126. Une source de courant 143 est également couplée à l'entrée de l'amplificateur 144 afin de polariser rapidement le transistor 142 dans une zone de fonctionnement où il se comporte en suiveur de tension.

Dans ce deuxième exemple de réalisation, la lecture d'un pixel 102 est réalisée par l'intermédiaire de trois transistors, par exemple de type MOS. La lecture se fait en tension et bénéficie de l'amplification locale réalisée par le transistor suiveur 142 qui bloque l'écoulement des charges sur le nœud actif 118. En technologie TFT, les transistors peuvent être par exemple réalisés à partir de polysilicium ou d'IGZO.

Ce deuxième exemple de réalisation réalise une lecture non destructive des charges générées par les capacités pyroélectriques. En effet, tant que le nœud actif 118 n'a pas subi de réinitialisation, les charges électriques générées sont conservées.

Dans les exemples décrits ci-dessus, le chauffage est stoppé pendant la première lecture des charges électriques. Autrement dit, l'instant $t_2$ est compris entre les instants $t_1$ et $t_3$. En variante, il est possible que le chauffage soit stoppé pendant la deuxième lecture des charges électriques, c'est-à-dire après l'instant $t_3$.

De manière générale, les instants $t_0$ à $t_5$ sont choisis tels que plus de la moitié de la durée de chauffage soit mise en œuvre pendant la première durée de mesure et que moins de la moitié de la durée de chauffage soit mise en œuvre pendant dans la deuxième durée de mesure.

**Revendications**

1. Procédé de capture d'un motif thermique par un capteur (100) comportant plusieurs pixels (102) comprenant chacun au moins un élément de mesure thermosensible (104), le capteur (100) comprenant en outre :

   - au moins un élément chauffant (112) configuré pour chauffer l'élément de mesure thermosensible (104) d'au moins un pixel (102) lors d'une mesure par l'élément de mesure thermosensible (104) dudit au moins un pixel (102) ;
   - au moins un circuit de lecture (116) configuré pour lire des charges électriques délivrées par ledit au moins un pixel (102) lors de la mesure par l'élément de mesure thermosensible (104) dudit au moins un pixel (102) ;

   le procédé comportant, pour chaque pixel (102), au moins la mise en œuvre des étapes suivantes :

   - chauffage de l'élément de mesure thermosensible (104) du pixel (102) pendant une durée de chauffage débutant à un instant $t_0$ et s'achevant à un instant $t_2$ postérieur à l'instant $t_0$ ;
   - première lecture des charges électriques délivrées par le pixel (102) pendant une première durée de mesure débutant à un instant $t_1$ et s'achevant à un instant $t_3$ postérieur à l'instant $t_1$, et donnant une première valeur de mesure $x_1$ correspondant aux charges électriques lues pendant la première durée de mesure $t_3$- $t_1$ ;
   - deuxième lecture des charges électriques délivrées par le pixel (102) pendant une deuxième durée de mesure débutant à un instant $t_4$ postérieur à l'instant $t_3$, et s'achevant à un instant $t_5$ postérieur à l'instant $t_4$, et donnant une deuxième valeur de mesure $x_2$ correspondant aux charges électriques lues pendant la seconde durée de mesure $t_5 - t_4$ ;
   - calcul d'une différence $x_1 - \alpha.x_2$, avec $\alpha$ correspondant à un nombre réel positif,

   dans lequel plus de la moitié de la durée de chauffage est mise en œuvre pendant la première durée de mesure et moins de la moitié de la durée de chauffage est mise en œuvre pendant la deuxième durée de mesure, et dans lequel l'instant $t_2$ intervient avant l'instant $t_5$ tel que la deuxième lecture des charges électriques délivrées par le pixel (102) est mise en œuvre au moins en partie pendant un refroidissement du pixel (102) lu.

2. Procédé selon la revendication 1, dans lequel l'instant $t_2$ est compris entre les instants $t_1$ et $t_3$.

3. Procédé selon l'une des revendications précédentes, dans lequel le procédé et le capteur (100) sont configurés pour réaliser une capture d'une empreinte digitale en contact avec une surface de capture du capteur (100).

4. Procédé selon une des revendications précédentes, dans lequel $\alpha$ est égal à la valeur du rapport de la première durée de mesure sur la deuxième durée de mesure.

5. Procédé selon l'une des revendications précédentes, dans lequel la première durée de mesure est égale à la deuxième durée de mesure.

6. Procédé selon l'une des revendications précédentes, comportant en outre, entre les première et deuxième lectures, une réinitialisation du circuit de lecture, ou une réinitialisation du pixel.

7. Procédé selon l'une des revendications précédentes, dans lequel :

   - les première et deuxième valeurs de mesure $x_1$ et $x_2$ sont mémorisées dans le circuit de lecture (116), et la

différence $x_1$ - $\alpha.x_2$ est calculée dans le circuit de lecture (116) puis le résultat de cette différence est délivré en sortie du circuit de lecture (116), ou

- les première et deuxième valeurs de mesure $x_1$ et $x_2$ sont délivrées successivement en sortie du circuit de lecture (116), et la différence $x_1$ - $\alpha.x_2$ est calculée en dehors du circuit de lecture (116).

8. Procédé selon l'une des revendications précédentes, dans lequel :

- la valeur de la durée du chauffage $t_2$ - $t_0$ est comprise entre environ 60 $\mu$s et 5000 $\mu$s, et/ou
- chacune des première et deuxième durées de mesure a une valeur comprise entre environ 60 $\mu$s et 5000 $\mu$s, et/ou
- les instants $t_0$ et $t_1$ sont choisis tels que la durée entre le début du chauffage et le début de la première lecture soit comprise entre environ 0 et 200 $\mu$s.

9. Procédé selon l'une des revendications précédentes, dans lequel chaque élément de mesure thermosensible (104) comporte au moins une capacité pyroélectrique formée par au moins une portion de matériau pyroélectrique (106) disposée entre des première et deuxième électrodes (108, 110).

10. Procédé selon la revendication 9, dans lequel l'une des première et deuxième électrodes (108, 110) de la capacité pyroélectrique de chaque pixel (102) est formée par une portion électriquement conductrice commune à tous les pixels (102) de la ligne à laquelle appartient ledit pixel (102).

11. Procédé selon la revendication 10, dans lequel la portion électriquement conductrice formant l'une des première et deuxième électrodes (108, 110) de tous les pixels (102) d'une même ligne forme également l'élément chauffant (112) des pixels (102) de la ligne.

12. Procédé selon l'une des revendications 10 ou 11, dans lequel l'autre des première et deuxième électrodes (108, 110) de la capacité pyroélectrique de chaque pixel (102) est formée par une portion électriquement conductrice commune à tous les pixels (102) de la colonne à laquelle appartient ledit pixel (102).

13. Procédé selon l'une des revendications 1 à 8, dans lequel chaque élément de mesure thermosensible (104) comporte au moins une thermistance ou au moins une diode, et/ou dans chaque pixel (102), l'élément de mesure thermosensible (104) forme l'élément chauffant (112).

14. Procédé selon l'une des revendications précédentes, dans lequel l'élément chauffant (112) est apte à chauffer par effet Joule l'élément de mesure thermosensible (104) de chaque pixel (102), et/ou dans lequel l'élément chauffant (112) est apte à émettre un rayonnement lumineux destiné à chauffer l'élément de mesure thermosensible (104) des pixels (102).

15. Capteur (100) de motif thermique comportant plusieurs pixels (102) comprenant chacun au moins un élément de mesure thermosensible (106), le capteur (100) comprenant en outre :

- au moins un élément chauffant (112) configuré pour chauffer l'élément de mesure thermosensible (104) d'au moins un pixel (102) lors d'une mesure par l'élément de mesure thermosensible (104) dudit au moins un pixel (102) ;
- au moins un circuit de lecture (116) configuré pour lire des charges électriques délivrées par ledit au moins un pixel (102) lors de la mesure par l'élément de mesure thermosensible (104) dudit au moins un pixel (102) ;
- des moyens de commande (114) configurés pour mettre en œuvre un procédé de capture selon l'une des revendications précédentes.

**Patentansprüche**

1. Verfahren zum Erfassen eines thermischen Musters durch einen Sensor (100), der mehrere Pixel (102) umfasst, von denen jedes mindestens ein wärmeempfindliches Messelement (104) umfasst, wobei der Sensor (100) ferner umfasst:

- mindestens ein Heizelement (112), das dazu konfiguriert ist, das wärmeempfindliche Messelement (104) des mindestens einen Pixels (102) während einer Messung des mindestens einen Pixels (102) durch das wärmeempfindliche Messelement (104) zu erwärmen;
- mindestens eine Leseschaltung (116), die dazu konfiguriert ist, elektrische Ladungen auszulesen, die von dem mindestens einen Pixel (102) während der Messung des mindestens einen Pixels (102) durch das wärmeempfindliche Messelement (104) geliefert werden;

wobei das Verfahren für jedes Pixel (102) wenigstens die Durchführung der folgenden Schritte umfasst:

- Aufheizen des wärmeempfindlichen Messelements (104) des Pixels (102) für eine Heizdauer, die zu einem Zeitpunkt $t_0$ beginnt und zu einem Zeitpunkt $t_2$ nach dem Zeitpunkt $t_0$ endet;
- erstes Auslesen von elektrischen Ladungen, die von dem Pixel (102) während einer ersten Messdauer geliefert werden, die zu einem Zeitpunkt $t_1$ beginnt und zu einem Zeitpunkt $t_3$ nach dem Zeitpunkt $t_1$ endet, und was einen ersten Messwert $x_1$ ergibt, der den während der ersten Messdauer $t_3 - t_1$ ausgelesenen elektrischen Ladungen entspricht;
- zweites Auslesen von elektrischen Ladungen, die von dem Pixel (102) während einer zweiten Messdauer geliefert werden, die zu einem Zeitpunkt $t_4$ nach dem Zeitpunkt $t_3$ beginnt und zu einem Zeitpunkt $t_5$ nach dem Zeitpunkt $t_4$ endet, und was einen zweiten Messwert $x_2$ ergibt, der den während der zweiten Messdauer $t_5 - t_4$ ausgelesenen elektrischen Ladungen entspricht;
- Berechnung einer Differenz $x_1 - \alpha \cdot x_2$, wobei $\alpha$ einer positiven reellen Zahl entspricht, wobei mehr als die Hälfte der Heizdauer während der ersten Messdauer und weniger als die Hälfte der Heizdauer während der zweiten Messdauer durchgeführt wird, und wobei der Zeitpunkt $t_2$ vor dem Zeitpunkt $t_5$ liegt, so dass das zweite Auslesen der von dem Pixel (102) gelieferten elektrischen Ladungen zumindest teilweise während eines Abkühlens des ausgelesenen Pixels (102) durchgeführt wird.

2. Verfahren nach Anspruch 1, wobei der Zeitpunkt $t_2$ zwischen den Zeitpunkten $t_1$ und $t_3$ liegt.

3. Verfahren nach einem der vorhergehenden Ansprüche, wobei das Verfahren und der Sensor (100) konfiguriert sind, um einen Fingerabdruck in Kontakt mit einer Erfassungsoberfläche des Sensors (100) zu erfassen.

4. Verfahren nach einem der vorhergehenden Ansprüche, wobei $\alpha$ gleich dem Wert des Verhältnisses der ersten Messdauer zur zweiten Messdauer ist.

5. Verfahren nach einem der vorhergehenden Ansprüche, wobei die erste Messdauer gleich der zweiten Messdauer ist.

6. Verfahren nach einem der vorhergehenden Ansprüche, das ferner zwischen dem ersten und dem zweiten Auslesen ein Zurücksetzen der Leseschaltung oder ein Zurücksetzen des Pixels umfasst.

7. Verfahren nach einem der vorhergehenden Ansprüche, wobei:

- der erste und der zweite Messwert $x_1$ und $x_2$ in der Leseschaltung (116) gespeichert werden und die Differenz $x_1 - \alpha \cdot x_2$ in der Leseschaltung (116) berechnet wird, wobei das Ergebnis dieser Differenz dann am Ausgang der Leseschaltung (116) bereitgestellt wird, oder
- der erste und der zweite Messwert $x_1$ und $x_2$ nacheinander am Ausgang der Leseschaltung (116) bereitgestellt werden, und die Differenz $x_1 - \alpha \cdot x_2$ außerhalb der Leseschaltung (116) berechnet wird.

8. Verfahren nach einem der vorhergehenden Ansprüche, wobei:

- der Wert der Heizdauer $t_2 - t_0$ zwischen ca. 60 $\mu$s und 5000 $\mu$s liegt, und/oder
- jede von der ersten und zweiten Messdauer einen Wert zwischen ca. 60 $\mu$s und 5000 $\mu$s aufweist, und/oder

die Zeitpunkte $t_0$ und $t_1$ so gewählt werden, dass die Zeitdauer zwischen dem Beginn des Heizens und dem Beginn des ersten Auslesens zwischen ca. 0 und 200 $\mu$s beträgt.

9. Verfahren nach einem der vorhergehenden Ansprüche, wobei jedes wärmeempfindliche Messelement (104) mindestens einen pyroelektrischen Kondensator umfasst, der durch mindestens einen Abschnitt pyroelektrischen Materials (106) gebildet ist, welcher zwischen einer ersten und einer zweiten Elektrode (108, 110) angeordnet ist.

10. Verfahren nach Anspruch 9, wobei eine aus der ersten und zweiten Elektrode (108, 110) des pyroelektrischen Kondensators jedes Pixels (102) durch einen elektrisch leitenden Abschnitt gebildet wird, der allen Pixeln (102) der Reihe gemeinsam ist, zu der das Pixel (102) gehört.

11. Verfahren nach Anspruch 10, wobei der elektrisch leitfähige Abschnitt, der die eine aus der ersten und zweiten Elektrode (108, 110) aller Pixel (102) derselben Reihe bildet, auch das Heizelement (112) der Pixel (102) der Reihe bildet

12. Verfahren nach einem der Ansprüche 10 oder 11, wobei die andere aus der ersten und zweiten Elektrode (108, 110) des pyroelektrischen Kondensators jedes Pixels (102) durch einen elektrisch leitenden Abschnitt gebildet wird, der allen Pixeln (102) der Spalte gemeinsam ist, zu der das Pixel (102) gehört.

13. Verfahren nach einem der Ansprüche 1 bis 8, wobei jedes wärmeempfindliche Messelement (104) mindestens einen Thermistor oder mindestens eine Diode umfasst, und/oder wobei in jedem Pixel (102) das wärmeempfindliche Messelement (104) das Heizelement (112) bildet.

14. Verfahren nach einem der vorhergehenden Ansprüche, wobei das Heizelement (112) geeignet ist, durch den Joule-Effekt das wärmeempfindliche Messelement (104) jedes Pixels (102) zu erwärmen, und/oder wobei das Heizelement (112) dazu geeignet ist, Lichtstrahlung zu emittieren, die dazu bestimmt ist, das wärmeempfindliche Messelement (104) der Pixel (102) zu erwärmen.

15. Thermischer Mustersensor (100) mit mehreren Pixeln (102), von denen jedes mindestens ein wärmeempfindliches Messelement (106) umfasst, wobei der Sensor (100) ferner umfasst:

   - mindestens ein Heizelement (112), das konfiguriert ist, um das wärmeempfindliche Messelement (104) von mindestens einem Pixel (102) während einer Messung des mindestens einen Pixels (102) durch das wärmeempfindliche Messelement (104) zu erwärmen;
   - mindestens eine Leseschaltung (116), die konfiguriert ist, um elektrische Ladungen auszulesen, die von dem mindestens einen Pixel (102) während der Messung des mindestens einen Pixels (102) durch das wärmeempfindliche Messelement (104) geliefert werden;
   - Steuermittel (114), die konfiguriert sind, um ein Verfahren zum Erfassen nach einem der vorhergehenden Ansprüche umzusetzen.


**Claims**

1. Method for capturing a thermal pattern by a sensor (100) comprising a plurality of pixels (102) each comprising at least one heat-sensitive measuring element (104), the sensor (100) further comprising:

   - at least one heating element (112) configured to heat the heat-sensitive measuring element (104) of at least one pixel (102) during a measurement by the heat-sensitive measuring element (104) of said at least one pixel (102);
   - at least one reading circuit (116) configured to read the electrical charges outputted by said at least one pixel (102) during a measurement by the heat-sensitive measuring element (104) of said at least one pixel (102);

   the method comprising, for each pixel (102), the implementation of at least the following steps:

   - heating the heat-sensitive measuring element (104) of the pixel (102) during a heating duration starting at a time $t_0$ and ending at a time $t_2$ later than the time $t_0$;
   - first reading of the electrical charges outputted by the pixel (102) during a first measurement duration starting at a time $t_1$ and ending at a time $t_3$ later than the time $t_1$, and giving a first measurement value $x_1$ corresponding to the electrical charges read during the first measurement duration $t_3 - t_1$;
   - second reading of the electrical charges outputted by the pixel (102) during a second measurement duration starting at a time $t_4$, later than the time $t_3$, and ending at a time $t_5$ later than the time $t_4$, and giving a second measurement value $x_2$ corresponding to the electrical charges read during the second measurement duration $t_5 - t_4$;
   - calculating a difference $x_1 - \alpha.x_2$, with $\alpha$ corresponding to a positive real number,

   wherein more than half of the heating duration is implemented during the first measurement duration and less than half of the heating duration is implemented during the second measurement duration, and wherein the time $t_2$ occurs

before the time $t_5$ such that the second reading of electrical charges outputted by the pixel (102) is implemented at least partly during a cooling of the read pixel (102).

2. Method according to claim 1, wherein the time $t_2$ is between the times $t_1$ and $t_3$.

3. Method according to one of the preceding claims, wherein the method and the sensor (100) are configured to capture a fingerprint in contact with a capture surface of the sensor (100).

4. Method according to one of the preceding claims, wherein $\alpha$ is equal to the value of the ratio of the first measurement duration over the second measurement duration.

5. Method according to one of the preceding claims, wherein the first measurement duration is equal to the second measurement duration.

6. Method according to one of the preceding claims, further comprising, between the first and second readings, a reset of the reading circuit, or a reset of the pixel.

7. Method according to one of the preceding claims, wherein:

 - the first and second measurement values $x_1$ and $x_2$ are stored in the reading circuit (116), and the difference $x_1 - \alpha.x_2$ is calculated in the reading circuit (116) and then the result of this difference is outputted at the output of the reading circuit (116), or
 - the first and second measurement values $x_1$ and $x_2$ are outputted consecutively at the output of the reading circuit (116), and the difference $x_1 - \alpha.x_2$ is calculated outside of the reading circuit (116).

8. Method according to one of the preceding claims, wherein:

 - the value of the heating duration $t_2 - t_0$ is between approximately 60 $\mu$s and 5000 $\mu$s, and/or
 - each of the first and second measurement durations has a value between approximately 60 $\mu$s and 5000 $\mu$s, and/or
 - the times $t_0$ and $t_1$ are chosen such that the time between the start of the heating and the start of the first reading is between approximately 0 and 200 $\mu$s.

9. Method according to one of the preceding claims, wherein each heat-sensitive measuring element (104) comprises at least one pyroelectric capacitor formed by at least one portion of pyroelectric material (106) disposed between the first and second electrodes (108, 110).

10. Method according to claim 9, wherein one of the first and second electrodes (108, 110) of the pyroelectric capacitor of each pixel (102) is formed by an electrically conductive portion common to all the pixels (102) of the line to which said pixel (102) belongs.

11. Method according to claim 10, wherein the electrically conductive portion forming one of the first and second electrodes (108, 110) of all the pixels (102) of a same line, also forms the heating element (112) of the pixels (102) of the line.

12. Method according to one of claims 10 or 11, wherein the other of the first and second electrodes (108, 110) of the pyroelectric capacitor of each pixel (102) is formed by an electrically conductive portion common to all the pixels (102) of the column to which said pixel (102) belongs.

13. Method according to one of claims 1 to 8, wherein each heat-sensitive measuring element (104) comprises at least one thermistor or at least one diode, and/or in each pixel (102), the heat-sensitive measuring element (104) forms the heating element (112).

14. Method according to one of the preceding claims, wherein the heating element (112) is capable of heating, by the Joule effect, the heat-sensitive measuring element (104) of each pixel (102), and/or wherein the heating element (112) is capable of emitting light for heating the heat-sensitive measuring element (104) of the pixels (102).

15. Thermal pattern sensor (100) comprising a plurality of pixels (102) each comprising at least one heat-sensitive measuring element (106), the sensor (100) further comprising:

- at least one heating element (112) configured to heat the heat-sensitive measuring element (104) of at least one pixel (102) during a measurement by the heat-sensitive measuring element (104) of said at least one pixel (102);
- at least one reading circuit (116) configured to read the electrical charges outputted by said at least one pixel (102) during a measurement by the heat-sensitive measuring element (104) of said at least one pixel (102);
- control means (114) configured to implement a capture method according to one of the preceding claims.

FIG.1

FIG.2

FIG.3

FIG.4A

FIG.4B

FIG.5

FIG.6

EP 3 767 260 B1

| Chauffage<br>ligne 0 | | | | Chauffage<br>ligne 1 | | | ... |

| 1ère Lecture<br>ligne 0 | Temps de<br>garde | 2ème Lecture<br>ligne 0 | Temps de<br>garde | 1ère Lecture<br>ligne 1 | Temps de<br>garde | 2ème Lecture<br>ligne 1 | Temps de<br>garde ... |
|---|---|---|---|---|---|---|---|
| | Temps de<br>numérisarion | | Temps de<br>numérisarion | | Temps de<br>numérisarion | | Temps de<br>numérisarion |

t0  t2  t3  t4  t5  t1  t2  t3  t4  t5
t1                          t0

## FIG.7

FIG.8A

FIG.8B

FIG.8C

FIG.9A

FIG.9B

FIG.9C

FIG.10

FIG.11

FIG.12

**EP 3 767 260 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4394773 A
- US 4429413 A
- US 6289114 B
- US 6091837 A
- EP 2385486 A1
- WO 2017093179 A1
- WO 2018020176 A1